# EUROPÄISCHE PATENTANMELDUNG

(11) **EP 1 266 784 A1**
(43) Veröffentlichungstag der Anmeldung: **18.12.2002**
(21) Anmeldenummer: 02012370.9
(22) Anmeldetag: 06.06.2002
(51) Int. Cl.: B60K 7/00

(54) **Antriebsbaugruppe und Antriebsvorrichtung für Fahrzeuge**

(30) Priorität: 16.06.2001 DE 10129152
(71) Anmelder: Voith Turbo GmbH & Co. KG, 89522 Heidenheim (DE)
(72) Erfinder: Mühlberger, Uwe, 89522 Heidenheim (DE); Angerer, Wolfram, 89518 Heidenheim (DE)
(74) Vertreter: Dr. Weitzel & Partner

(57) **Zusammenfassung**

Eine als Baueinheit vormontierbare Antriebsbaugruppe für den Einsatz in Fahrzeugen zum Antrieb zweier Räder (2a,2b) umfaßt einen Achskörper (32), Radachselemente (31a,31b) einem Rad zugeordnete elektrische Antriebsmaschinen (4a,4b), und eine dem Fahrmotor zugeordnete Leistungselektronik, umfassend mindestens einen Umrichter (12a,12b). Die elektrischen Antriebsmaschinen und die Leistungselektronik sind in der baulichen Einheit aus Radachselement und Achskörper integriert.

## Beschreibung

Die Erfindung betrifft eine Antriebsbaugruppe für den Einsatz in Antriebsvorrichtungen von Fahrzeugen, im einzelnen mit den Merkmalen aus dem Oberbegriff des Anspruchs 1; ferner eine Antriebsvorrichtung für ein Fahrzeug.

Antriebsvorrichtungen für Fahrzeuge, insbesondere Einzelradantriebe, sind aus einer Vielzahl von Druckschriften bekannt. Stellvertretend wird auf die Druckschrift DE 195 27 951 A1 verwiesen. Diese Druckschrift offenbart eine Antriebsvorrichtung in Form eines Einzelradantriebs mit einem Antrieb über die Radnabe durch eine Antriebsmaschine in Form eines Elektromotors, insbesondere eine Transversalflußmaschine, welche achsversetzt zur Radnabenachse im wesentlichen in einem Bereich außerhalb der Felge angeordnet ist und deren Abtriebswelle mittels eines Ritzels mit einem innenverzahnten Hohlrad kämmt. Das Ritzel ist dabei mit der Abtriebswelle und das Hohlrad mit einem Radkörper drehfest verbunden. Die Drehmomentübertragung von diesem zur Radnabe erfolgt über wenigstens eine Planetenradstufe. Die elektrische Maschine, welche im Traktionsbetrieb als Fahrmotor fungiert, ist mit einer Energiequelle elektrisch gekoppelt. Als Energiequelle finden dabei beispielsweise ein dieselelektrisches Antriebsaggregat in Form einer Verbrennungskraftmaschine, die mit einem Generator gekoppelt ist, eine Brennstoffzelle oder Batterie Verwendung. Die Versorgung der Antriebsmaschine mit elektrischer Leistung erfolgt über mindestens eine Umrichtereinheit, über welche die Drehzahl und das Drehmoment des Fahrmotors gesteuert werden können. Diese sind zu diesem Zweck der Antriebsmaschine zugeordnet. Bei den bekannten Radantriebsvorrichtungen sind die zugehörigen Umrichter aus Platzmangel an unterschiedlichen Stellen im Fahrzeug untergebracht, unter anderem auch auf dem Fahrzeugdach. In diesem Fall müssen die für die Fahrmotoren erforderlichen Verbindungskabel - bzw. leitungen, welche auch als Leistungskabel bezeichnet werden, zu der sich relativ dazu bewegenden Achse verlegt werden. Die Verbindungsleitungen sind dabei den Relativbewegungen zwischen den ruhenden Fahrzeugteilen und der sich bewegenden Achse mit ausgesetzt. Bei Verwendung eines Asynchronmotors als Fahrmotor sind dabei je Motor drei Leistungskabel, bei Ausführung des Fahrmotors als Synchronmaschine mit transversaler Flußführung vier Leistungskabel zur Verbindung zwischen Umrichter und der als Fahrmotor fungierenden elektrischen Maschine erforderlich. Die große Anzahl möglicher Leitungsverbindungen und die Beanspruchung der Leitungskabel, welche durch die Relativbewegungen der über die Verbindungslänge angeordneten Anlenkpunkte bedingt ist, führen oft zu Lösungen der Verbindungen oder zur Beschädigung durch Quetschung oder Abrieb, d.h. Defekte oder Störungen, die zum Fahrzeugausfall führen können. Des weiteren fungieren die leistungsführenden Elemente auch als Störquellen, über die sich Störströme oder Störspannungen nachweisen lassen. Der Einfluß dieser Störfilter auf die nächste Umgebung kann dabei durch Messung der magnetischen und elektrischen Feldkomponenten beurteilt werden. Um die elektromagnetische Verträglichkeit dieser Verbindungen sicherzustellen, ist es bei Umplazierung der Leistungselektronik, insbesondere der Umrichter, erforderlich, diese entsprechend den geltenden gesetzlichen Vorschriften erneut zu überprüfen. Besteht insbesondere aus Platz- oder anderen Gründen die Notwendigkeit Leistungskabel durch den Fahrgastraum zu verlegen, sind die Anforderungen an die elektromagnetische Verträglichkeit besonders hoch. Dabei sind elektromagnetische Störungen, welche leitungsgebunden sein können oder aufgrund von Strahlung entstehen und die neben einer Wirkung auf den Menschen auch Einfluß auf die Funktionsweise anderer elektronischer Geräte nehmen können, weitestgehend zu vermeiden, was durch Abschirmung erfolgt. Der Aufwand für diese ist bei entsprechender Verbindungslänge auch entsprechend hoch. Dabei ist zu berücksichtigen, daß entsprechend des konkreten Einsatzfalles, den dort vorherrschenden Bauraumbedingungen und damit der Möglichkeit der Plazierung der Leistungselektronik immer eine emeute Abnahme erforderlich wird, um die gesetzlichen Bestimmungen zu erfüllen.

Der Erfindung liegt daher die Aufgabe zugrunde, eine Antriebsvorrichtung der eingangs genannten Art derart weiterzuentwickeln, daß zum einen die Störungen im Betrieb des Fahrzeuges, insbesondere die Fahrzeugausfälle, die durch defekte, gequetschte oder durchgescheuerte Leistungskabel oder andere Defekte an der Leistungselektronik bedingt sind, vermieden werden und des weiteren die EMV-Sicherheit erhöht beziehungsweise die zur Gewährleistung dieser erforderlichen Maßnahmen auf ein Minimum reduziert werden. Des weiteren soll möglichst für eine Vielzahl von Antriebsvorrichtungen eine einheitliche Lösung bezüglich der Plazierung der Leistungselektronik vorgesehen werden, die ein höchstes Maß an EMV-Sicherheit und geringem Bauraumbedarf sowie Sicherung gegenüber Beschädigungen aufgrund von Relativbewegungen darstellt.

Die erfindungsgemäße Lösung ist durch die Merkmale des Anspruchs 1 charakterisiert. Vorteilhafte Ausgestaltungen sind in den Unteransprüchen wiedergegeben.

Erfindungsgemäß umfaßt eine Antriebsbaugruppe für den Einsatz in Antriebsvorrichtungen von Fahrzeugen zum Antrieb mindestens zweier auf einer theoretischen Verbindungsachse angeordneten Rädern mit jeweils einer Radnabe und einem Radachselement einen Achskörper, der mit den Radachselementen zu einer baulichen Einheit zusammenfaßbar ist. Mindestens einem Rad ist dabei eine elektrische Maschine als sogenannter Fahrmotor zugeordnet. Diese ist elektrisch mit einer Energiequelle koppelbar. Zur Steuerung der abgebbaren Leistung, insbesondere des Momentes oder der Drehzahl, ist der als Fahrmotor fungierenden elektrischen Maschine mindestens eine Umrichtereinheit zugeordnet. Diese ist mit der elektrischen Maschine verbunden. Erfindungsgemäß sind die Verbindungsleitungen, welche auch als Leistungskabel bezeichnet werden, die dem Fahrmotor zugeordnete Umrichtereinheit und der Fahrmotor in der baulichen Einheit aus Achskörper und Radachselementen integriert und bilden somit die Achse, welche auch als elektrische Achse bezeichnet werden kann. Dabei können die Radachselemente und der Achskörper, von separaten Bauelementen, welche lösbar miteinander verbindbar sind, gebildet werden. Denkbar ist auch eine Ausführung der Achse aus zwei miteinander verbindbaren Bauelemeten, deren Kontaktebene quer zur Fahrtrichtung verläuft. In diesem Fall sind die die Radachselemente beschreibenden Teile und das jeweilige Teilelement des Achskörpers jeweils als integrale Baueinheit ausgeführt.

Die Integration der Leistungselektronik sowie der Antriebsmotoren im Achsgehäuse bietet die Möglichkeit einer sehr platzsparenden und zentralen Anordnung eines Teilabschnittes einer Antriebsvorrichtung, so daß lediglich nur noch eine Kopplung zwischen der Energiequelle und der Leistungselektronik, das heißt zwischen einem beliebigen Ort im Fahrzeug und der Leistungselektronik im Achsgehäuse erfolgen muß. Durch die Integration der elektrischen Verbindung zwischen Umrichter und Antriebsmaschine, welche von Leistungskabeln gebildet wird, im Achsgehäuse sind nur noch geringe Leistungskabellängen erforderlich, welche aufgrund der Möglichkeit einer festen Führung, beispielsweise an der Innenwand der Achse, keinen Relativbewegungen an den verschiedenen Führungspunkten mehr ausgesetzt sind. Beschädigungen durch Quetschung oder Abrieb werden somit vermieden.

Durch den Einbau der Antriebsmotoren und der dazugehörigen Umrichter in das Achsgehäuse, welches in der Regel aus einem metallischen Werkstoff besteht, entfällt die EMV-Problematik der getakteten Spannung auf den Leistungskabeln und es genügt der ungleich geringere EMV-Schutz für die nunmehr zur Koppelung mit der beliebig im Fahrzeug angeordneten Energiequelle erforderlichen zwei Gleichstromkabel. Die Energiequelle kann dabei als Brennstoffzelle, Oberleitung, Batterie oder Dieselmotor-Generatoreinheit ausgeführt sein.

Die erfindungsgemäße Lösung ist hauptsächlich für Einzelradantriebe anwendbar, bei denen jedem Rad eine Antriebsmaschine in Form des als elektrische Maschine ausgeführten Fahrmotors zugeordnet ist. Dies bedeutet, daß in der Achse, insbesondere im Achsgehäuse die beiden elektrischen Antriebsmaschinen und des weiteren die diesen Maschinen zugeordneten Umrichtereinheiten mit den entsprechenden Leistungsverbindungskabel integriert sind. Damit wird es möglich, eine komplett vormontierte Baugruppe in Form einer sogenannten elektrischen Achse zu schaffen, welche bereits Antriebsmotoren und Leistungselektronik enthält, wobei der Achse lediglich nur noch zwei Anschlüsse zur Kopplung mit der Energiequelle zuzuordnen ist. Diese kann komplett vormontiert angeboten und gehandelt werden.

Die erfindungsgemäße Zentralisierung ist nicht auf eine konkrete Art elektrischer Antriebsmaschinen beschränkt. Als elektrische Antriebsmaschine bzw. Antriebsmaschinen können dabei beispielsweise Asynchronmaschinen oder in einer besonders bevorzugten Ausführung bei Einsatzfällen mit hoher erforderlicher Leistungsdichte als Synchronmaschine mit transversaler Flußführung, insbesondere Transversalflußmaschine ausgeführt sein.

Unter einem weiteren Aspekt der Erfindung sind der als Fahrmotor fungierenden elektrischen Maschine weitere Übertragungselemente zugeordnet, die zwischen Radnabe und Rotor der elektrischen Maschine geschaltet sind. Diese können beispielsweise einen oder mehrere Planetenradsätze und/oder Stirnradsätze umfassen. Diese Übertragungselemente sind dann ebenfalls mit in der Achse integriert.

Vorzugsweise ist der Achskörper derart ausgeführt, daß der die elektrische Antriebsmaschine aufnehmende Teil sich beim Einbau im Fahrzeug wenigstens teilweise innerhalb der axialen Erstreckung der Radfelge befindet. Vorzugsweise gelangen jedoch Ausführungen zur Anwendung, bei welchen die elektrische Antriebsmaschine und die eventuell zwischen dieser und der Radnabe angeordneten Übertragungselemente vollständig im axialen Erstreckungsbereich des Rades, insbesondere der Radfelgen angeordnet sind. Die Gesamtachse wird dabei vorzugsweise als Niederflurachse ausgeführt, das heißt, der für den Fahrgastraum eines Fahrzeuges zur Verfügung stehende Bauraum im Achsbereich vergrößert sich erheblich.

Die Antriebsbaugruppe eignet sich sowohl für den Einsatz des Antriebes von Zwillingsbereifung als auch Einzelrädern.

Die erfindungsgemäße Antriebsbaugruppe ist des weiteren Bestandteil einer Antriebsvorrichtung für ein Fahrzeug, umfassend mindestens eine Energiequelle. Die Energiequelle ist dabei elektrisch mit der Antriebsbaugruppe gekoppelt, wobei die Kopplung an den beiden Anschlüssen vorzugsweise am Achskörper oder auch im Achskörper erfolgt. Als Energiequelle finden dabei dieselelektrische Antriebsaggregate, Brennstoffzellen, Batterien oder eine Oberspannungsleitung Verwendung. Die elektrische Kopplung zwischen Energiequelle und den Fahrmotoren ist dabei derart ausgeführt, daß ein Teil im Achskörper integriert ist und ein Teil außerhalb des Achskörpers geführt wird, vorzugsweise in Form zweier Gleichstromkabel. Mit dieser Lösung ist die erfindungsgemäß gestaltete Antriebsbaugruppe auch autark gegenüber dem Wechsel einer Energiequelle.

Die erfindungsgemäße Lösung wird nachfolgend anhand von Figuren erläutert. Darin ist im einzelnen folgendes dargestellt:
- Fig. 1 und 2: verdeutlichen den Grundaufbau einer erfindungsgemäß gestalteten Antriebsbaugruppe in Form einer elektrischen Achse in zwei Ansichten;
- Figur 3: verdeutlicht eine bevorzugte Ausführung mit einer elektrischen Maschine in Form einer Synchronmaschine mit transversaler Flußführung.

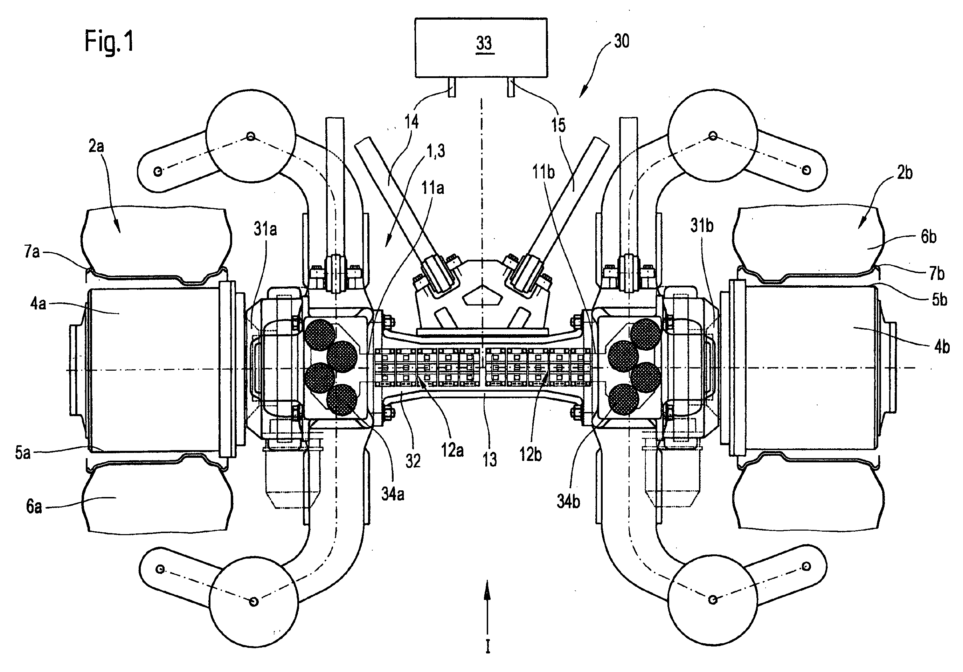

Die Figur 1 verdeutlicht in schematisch vereinfachter Darstellung anhand eines Ausschnittes aus einer Antriebsvorrichtung 30 den Grundaufbau einer erfindungsgemäß gestalteten Antriebsbaugruppe 1 zum Antrieb mindestens zweier, auf einer quer zur Fahrrichtung ausgerichteten theoretischen Verbindungsachse A_{R} angeordneten Rädern 2, hier der Räder 2a und 2b, für den Einsatz in Fahrzeugen anhand einer Ansicht von oben auf die Achse 3. Dazu ist jedem Rad, dem Rad 2a und dem Rad 2b eine im Traktionsbetrieb als Fahrmotor fungierende elektrische Antriebsmaschine 4a bzw. 4b zugeordnet. Jedes Rad 2a und 2b umfaßt dabei wenigstens, eine sich wenigstens mittelbar auf einem Radachselement 31a bzw. 31b, welche mit einem Achskörper 32 die bauliche Einheit Achse 3 bildet, abstützende Radnabe 5a bzw. 5b und eine zur Abstützung des Reifens 6a bzw. 6b vorgesehene Radfelge 7a bzw. 7b. Jede einem Rad zugeordnete elektrische Antriebsmaschine 4a bzw. 4b umfaßt wenigstens einen, mit der entsprechende Radnabe 5a bzw. 5b wenigstens mittelbar in Drehverbindung stehenden, und in dieser Figur nicht dargestellten Rotor 8 und einen Stator 9. Zur Versorgung der als Fahrmotoren im Traktionsbetrieb fungierenden elektrischen Antriebsmaschinen 4a und 4b ist diesen eine, in dieser Figur lediglich schematisch angedeutete Energiequelle 33 zugeordnet. Als Energiequelle können dabei unterschiedliche Systeme zur Anwendung gelangen. Denkbar sind Ausführungen als dieselelektrische Antriebssysteme, bei welchen die an den Fahrmotoren erforderliche Leistung über eine Verbrennungskraftmaschine bereitgestellt wird, die mit einem Generator mechanisch koppelbar ist. Andere Möglichkeiten bestehen in der Ausführung der Energiequelle 33 in Form einer Batterie oder einer Brennstoffzelleneinheit. Jede Energiequelle 33 ist dabei elektrisch mit den elektrischen Antriebsmaschinen 4a und 4b gekoppelt. Die elektrische Kopplung umfaßt dabei in der Regel einen Spannungszwischenkreis 10, welcher vorzugsweise in Form eines Gleichspannungszwischenkreises ausgeführt ist. Zur Steuerung der an den einzelnen elektrischen Antriebsmaschinen 4a und 4b abgebbaren Momente sind Wechselrichtereinheiten vorgesehen. Dabei ist jeder elektrischen Antriebsmaschine 4a und 4b mindestens eine Wechselrichtereinheit, hier mit 12a und 12b bezeichnet, zugeordnet. Erfindungsgemäß sind die entsprechenden Wechselrichtereinheiten 12a und 12b in der Achse 3, insbesondere dem Achsgehäuse 13, integriert. Die Verbindungsleitungen 11a, 11b zwischen der Leistungselektronik, insbesondere den Wechselrichtereinheiten 12a und 12b und den elektrischen Antriebsmaschinen 4a, 4b, werden ebenfalls innerhalb des Achsgehäuses 13 verlegt, d.h. diese sind ebenfalls in der Achse 3, insbesondere dem Achsgehäuse 13 integriert. Da das Achsgehäuse 13 in der Regel aus einem metallischen Werkstoff besteht, entfällt die Problematik der elektromagnetischen Verträglichkeit für die Leistungskabel 11a, 11b. Des weiteren ist es lediglich nur noch erforderlich, zwei Verbindungsleitungen, insbesondere Kabel, hier mit 14 und 15 bezeichnet, von der Energiequelle 33 zu den Umrichtereinheiten 12a, 12b zu verlegen. Die Integration der beiden elektrischen Antriebsmaschinen 4a und 4b sowie der diesen zugeordneten Umrichtereinheiten 12a, 12b und weiteren elektronischen Bauelementen, beispielsweise Kondensatoren 34a, 34b in der Achse 3, insbesondere dem Achsgehäuse 13 ermöglicht es, eine vollständig vormontierte Antriebsbaugruppe 1 für mindestens zwei auf einer theoretischen Verbindungsachse A_{R} angeordnete Räder 2a und 2b für den Einsatz in Fahrzeugen bereitzustellen.

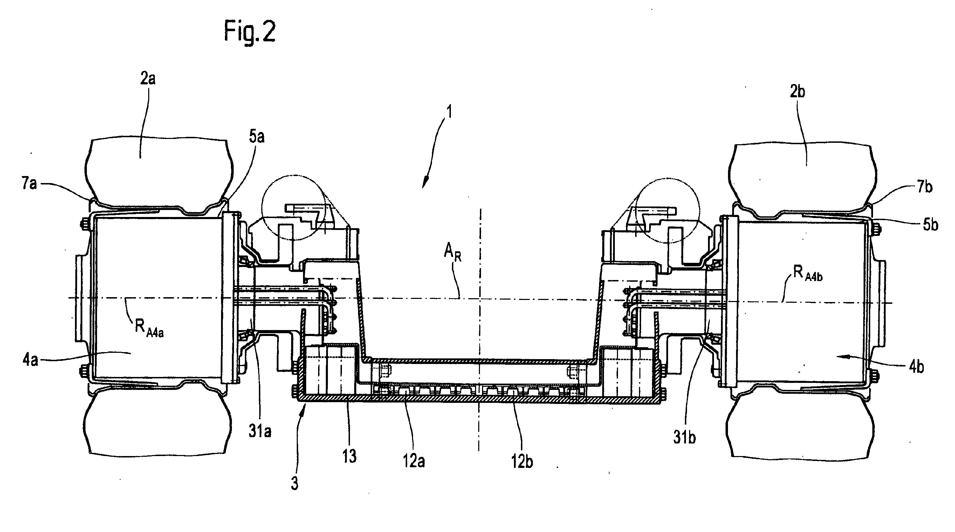

Die Figur 2 verdeutlicht eine Ausführung einer erfindungsgemäß gestalteten Antriebsbaugruppe 1 in einer Ansicht I auf die Achse 3 gemäß Figur 1. Der Aus dieser Figur wird ersichtlich, daß es sich bei der Achse 3 um eine Niederflurachse handelt. In diesem Fall ist das Achsgehäuse 13 derart ausgeführt, daß dieses nicht vollständig im Bereich der theoretischen Verbindungsachse A_{R} angeordnet ist, sondern in Einbaulage im Fahrzeug betrachtet sich im Bereich unterhalb der theoretischen Verbindungsachse A_{R} erstreckt und ledigich die elektrischen Antriebsmotoren 4a und 4b bzw. deren Rotationsachsen R_{A4a} und R_{A4b} mit der theoretischen Verbindungsachse A_{R} zusammenfallen.

Aus Gründen der effektiven Ausnutzung des zur Verfügung stehenden Bauraumes ist die Antriebsbaugruppe 1 derart konzipiert, daß die einzelnen, die Räder 2a und 2b antreibenden elektrischen Antriebsmaschinen 4a und 4b wenigstens teilweise innerhalb eines Bereiches angeordnet sind, welcher durch die axiale Erstreckung der Radfelge 7a bzw. 7b beschrieben wird. Vorzugsweise erfolgt dabei die Anordnung der elektrischen Antriebsmaschine 4a und 4b derart, daß diese hinsichtlich ihrer axialen Erstreckung vollständig im Bereich der axialen Erstreckung der Radfelgen 7a und 7b liegt. Ausführungen, die sich darüber hinaus erstrecken, sind ebenfalls denkbar, bilden jedoch den Nachteil, daß diese insbesondere bei Ausführungen in Form von Niederflurachsen den für andere Bauelemente, beispielsweise Bremseinrichtungen, zur Verfügung stehenden Bauraum einengen und insbesondere auch den zusätzlichen Platz, welcher für den Fahrgastraum gewonnen werden kann.

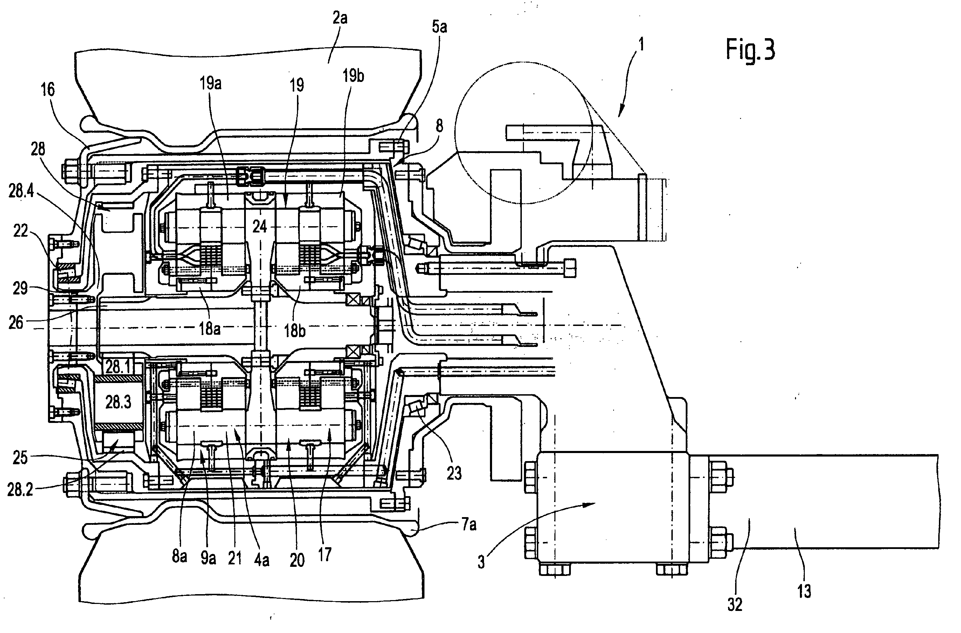

Bezüglich der Ausführung der elektrischen Antriebsmaschinen 4a und 4b bestehen eine Vielzahl von Möglichkeiten. Diese können als Asynchronmaschinen ausgeführt werden oder aber in einer bevorzugten Ausführung als Synchronmaschinen mit transversaler Flußführung, insbesondere Transversalflußmaschine. Die Figur 3 verdeutlicht dabei beispielhaft die mögliche besonders vorteilhafte Ausführung einer Integration einer elektrischen Antriebsmaschine 4a bzw. 4b in einem Rad 2a bzw. 2b anhand eines Ausschnittes aus der erfindungsgemäß gestalteten Antriebsbaugruppe 1. Der Grundaufbau entspricht dabei dem bereits in der Figur 1 beschriebenen. Das Rad 2a weist eine Felge 7a, einen Radkörper 16 sowie eine Radnabe 5a auf. Die Felge 7a ist dabei über den Radkörper 16 mit der Radnabe 5a verbunden. Bei dem Rad 2a handelt es sich dabei um einen Reifen, beispielsweise mit größerer Breite, welcher als auch Super-Single-Reifen bezeichnet werden kann. Denkbar ist jedoch auch, daß es sich bei den Rädern, insbesondere dem Rad 2a um eine Zwillingsradanordnung handelt. Die elektrische Antriebsmaschine 4a ist dabei fast vollständig in axialer Richtung im Rad 2a integriert. Die elektrische Antriebsmaschine 4a ist im dargestellten Fall als Synchronmaschine mit transversaler Flußführung, insbesondere Transversalflußmaschine 17 ausgeführt. Diese umfaßt einen Rotor 8a und einen, dem Rotor 8a zugeordneten Stator 9a. Bei der dargestellten Ausführung der Transversalflußmaschine 17 handelt es sich um eine zweiphasige Maschine. Der Stator 9a umfaßt einen Innenstator 18 mit einem ersten Innenstatorelement 18a und einem zweiten Innenstatorelement 18b, welche jeweils den einzelnen Polstrukturen 20 und 21 des Rotors 8a zugeordnet sind. Der Außenstator 19 ist in zwei Außenstatorelemente 19a und 19b unterteilt, welche ebenfalls den einzelnen Polstrukturen 20 und 21 des Rotors 8a zugeordnet sind. Zur Realisierung der Funktionsweise ist es dabei erforderlich, daß der Stator 9a wenigstens den Außenstator 19 umfaßt. Auf den Innenstator 18 kann unter Umständen verzichtet werden. Die einzelnen Statorelemente, die Innenstatorelemente 18a, 18b und die Außenstatorelemente 19a und 19b umfassen vorzugsweise eine Vielzahl von in Umfangsrichtung hintereinander in bestimmten Abständen zueinander angeordneten Schnittbandkernen. Diese sind vorzugsweise aus hintereinander angeordneten Blechelementen ausgeführt, welche sogenannte laminierte Blechpakete bilden.

Der Rotor 8a der elektrischen Maschine 4a, insbesondere der Transversalflußmaschine 17, steht wenigstens mittelbar mit der Radnabe 5a in Triebverbindung. Die Radnabe 5a wiederum ist mit dem Radkörper 16 drehfest verbunden und damit mit der Radfelge 7a. Dabei ist es vorgesehen, daß das den Stator, insbesondere den Außenstator 19 tragende Element von einem mit dem Achskörper 32 verbindbaren Radachselement 31a, insbesondere dessen Innengehäuse gebildet wird. Die einzelnen Statorelemente, insbesondere Außenstatorelemente 19a und 19b, können dabei mit dem statortragenden Element eine bauliche Einheit dahingehend bilden, daß diese als ein Bauteil ausgeführt sind. Es ist jedoch auch denkbar, die bauliche Einheit durch Kopplung der einzelnen Statorelemente, insbesondere der Außenstatorelemente 19a und 19b mit dem statortragenden Element zu realisieren.

Die Abstützung des Rades 2a über den Radkörper 16 und die Radnabe 5a erfolgt mittels entsprechender Lageranordnungen, hier einer ersten äußeren Lageranordnung 22 und einer zweiten inneren Lageranordnung 23. Über diese Lageranordnungen 22 bzw. 23 stützt sich die Radnabe 5a auf der Radachse 3 in Form des statortragenden Bauelementes ab. Dazu ist es weiter vorgesehen, daß wenigstens der Rotor 8a der elektrischen Antriebsmaschine 4a, insbesondere der Transversalflußmaschine 17 in axialer Richtung zwischen der äußeren Lageranordnung 22 und der inneren Lageranordnung 23 angeordnet ist.

Die elektrische Antriebsmaschine weist einen im wesentlichen symmetrischen Aufbau auf. Der Rotor 8a wird dabei von einer Trägerscheibe 24 und beidseitig von der zentralen Trägerscheibe 24 sich in axialer Richtung erstreckenden Polstrukturen 20 und 21 gebildet. Jede Polstruktur 20 bzw. 21 besteht dabei aus wenigstens zwei nebeneinander angeordneten, durch eine Zwischenlage aus magnetisch und elektrisch nicht leitendem Material getrennten Ringelementen. Diese weisen dazu in Umfangsrichtung eine Vielzahl von wechselweise angeordneten polarisierten Magneten und dazwischenliegenden Weicheisenelementen auf. Denkbar ist jedoch auch eine Ausführung mit nur einer an einer zentralen Trägerscheibe 24 angeordneten Polstruktur. In einer Weiterentwicklung ist vorzugsweise zur Untersetzung bzw. zur Übersetzung der Drehzahl der elektrischen Antriebsmaschine 4a, insbesondere der Transversalflußmaschine eine Drehzahl-/Drehmomentenwandlungseinrichtung 25 in Form einer Leistungsübertragungseinrichtung nachgeschaltet. Die Kopplung bzw. Realisierung der Drehverbindung zwischen dem Rotor 8a der elektrischen Antriebsmaschine 4a und der Radnabe 5a erfolgt dabei über die mechanische Drehzahl-/Drehmomentenwandlungseinrichtung 25. Zu diesem Zweck ist der Rotor 8a der elektrischen Antriebsmaschine 4a drehfest mit einer Hohlwelle 26 gekoppelt, welche mit dem Eingang der mechanischen Drehzahl-/Drehmomentenwandlungseinrichtung 25 gekoppelt ist. Die mechanische Drehzahl-/Drehmomentenwandlungseinrichtung 25 umfaßt vorzugsweise wenigstens einen Planetenradsatz 28. Dieser weist wenigstens ein Sonnenrad 28.1, ein Hohlrad 28.2, Planetenräder 28.3 und einen Steg 28.4 auf. Das Sonnenrad 28.1 ist dazu vorzugsweise in die Hohlwelle 26 eingearbeitet. Es besteht jedoch auch theoretisch die Möglichkeit, dieses als separates Bauteil drehfest mit der Hohlwelle 26 zu verbinden. Das Hohlrad 28.2 ist am statortragenden Bauteil, insbesondere dem Radachselement 31 a, angeordnet. Vorzugsweise ist dieses in das statortragenden Bauteil bzw. bei Bestehen des statortragenden Bauteiles aus mehreren miteinander kraft- und/oder formschlüssigen verbundenen Bauelementen in eines von diesen eingearbeitet. Den Ausgang bzw. den Abtrieb des mechanischen Drehzahl-/Drehmomentenwandlers 25 bildet dabei der Steg 28.4. Dieser ist drehfest mit einer sogenannten Antriebswelle 29 gekoppelt. Die Abstützung des Rotors 8a der elektrischen Antriebsmaschine 4a, des mechanischen Drehzahl-/Drehmomentenwandlers 25 und der Radnabe 5a erfolgt auf dem statortragenden Bauelement über die äußere Lageranordnung 22. Diese ist vorzugsweise als Schrägrollenlager ausgeführt. Die Abstützung des Rades 2a erfolgt des weiteren über die innere Lageranordnung 23 auf dem statortragenden Bauelement bzw. dem Radachselement 31a bzw. der Achse 3.

### Bezugszeichenliste

- 1: Antriebsbaugruppe
- 2, 2a, 2b: Räder
- 3: Achse
- 4a, 4b: elektrische Antriebsmaschine
- 5a, 5b: Radnabe
- 6a, 6b: Reifen
- 7a, 7b: Radfelge
- 8a, 8b: Rotor
- 9a, 9b: Stator
- 10: Spannungszwischenkreis
- 11a, 11b: Kondensatoren
- 12, 12a, 12b: Wechselrichtereinheiten
- 13: Achsgehäuse
- 14: Verbindungskabel
- 15: Verbindungskabel
- 16: Radkörper
- 17: Synchronmaschine mit transversaler Flußführung
- 18: Innenstator
- 18a, 18b: Innenstatorelemente
- 19: Außenstator
- 19a, 19b: Außenstatorelemente
- 20: Polstruktur
- 21: Polstruktur
- 22: äußere Lageranordnung
- 23: innere Lageranordnung
- 24: Trägerscheibe
- 25: Drehzahl-/Drehmomentenwandler
- 26: Hohlwelle
- 27: Lager
- 28: Planetenradsatz
- 29: Antriebswelle
- 30: Antriebsvorrichtung
- 31a, 31b: Radachselemente
- 32: Achskörper
- 33: Energiequelle

## Patentansprüche

1. Antriebsbaugruppe (1) für den Einsatz in Antriebsvorrichtungen von Fahrzeugen zum Antrieb zweier auf einer theoretischen Verbindungsachse angeordneten Rädern (2; 2a, 2b), umfassend jeweils eine Radnabe (5a, 5b) und ein Radachselement (31a, 31b);
1.1 mit einem Achskörper (32), der mit den Radachselementen (31a, 31b) eine bauliche Einheit (3) bildet;
1.2 mit einer, mindestens einem Rad (2; 2a, 2b) zugeordneten und als Fahrmotor im Traktionsbetrieb fungierenden elektrischen Antriebsmaschine (4a, 4b), umfassend einen Rotor (8a, 8b), der entweder direkt oder über weitere Übertragungselemente mit der Radnabe (5a, 5b) verbindbar ist;
1.3 mit der elektrischen Maschine (4a, 4b) zugeordneten Leistungselektronik, umfassend mindestens einen Umrichter (12; 12a, 12b), der elektrisch mit der elektrischen Antriebsmaschine (4a, 4b) gekoppelt ist;
1.4 die elektrische Antriebsmaschine (4a, 4b), die der elektrischen Antriebsmaschine zugeordneten Umrichter (12; 12a, 12b) und die elektrische Verbindung zwischen Umrichter (12; 12a, 12b) und elektrischer Antriebsmaschine (4a, 4b) sind in der baulichen Einheit (3) aus Radachselement (31a, 31b) und Achskörper (32) integriert.

2. Antriebsbaugruppe (1) nach Anspruch 1, **dadurch gekennzeichnet, daß** am oder im Achskörper (32) zwei Anschlüsse (14, 15) zur Koppelung der Umrichter (12a, 12b)mit einer Energiequelle vorgesehen sind.

3. Antriebsbaugruppe (1) nach Anspruch 1 oder 2, **dadurch gekennzeichnet, daß** jedem Rad (2; 2a, 2b) eine elektrische Antriebsmaschine (4a, 4b) mit zugeordneter Leistungselektronik zugeordnet ist.

4. Antriebsbaugruppe (1) nach Anspruch 3, **dadurch gekennzeichnet, daß** die beiden elektrischen Antriebsmaschinen (4a, 4b) zugeordneten Umrichter (12; 12a, 12b) über die beiden Anschlüsse mit elektrischer Leistung versorgt werden.

5. Antriebsbaugruppe (1) nach einem der Ansprüche 1 bis 4, **dadurch gekennzeichnet, daß** das Radachselement (31a, 31b) und der Achskörper (32) von einer integralen Baueinheit (3) gebildet werden, welche in einer Ebene quer zur Fahrtrichtung zum Zwecke der Integration der einzelnen Elemente - elektrische Antriebsmaschine (4a, 4b), Umrichter (12; 12a, 12b) und elektrische Kopplung zwischen Umrichter (12; 12a, 12b) und Antriebsmaschine (4a, 4b) - mindestens zweiteilig ausgeführt ist.

6. Antriebsbaugruppe (1) nach einem der Ansprüche 1 bis 5, **dadurch gekennzeichnet, daß** die elektrische Antriebsmaschine (4a, 4b) als Synchronmaschine (17) mit transversaler Flußführung ausgeführt ist.

7. Antriebsbaugruppe (1) nach einem der Ansprüche 1 bis 5, **dadurch gekennzeichnet, daß** die elektrische Antriebsmaschine (4a, 4b) als Asynchronmaschine ausgeführt ist.

8. Antriebsbaugruppe (1) nach einem der Ansprüche 1 bis 6, **gekennzeichnet durch** die folgenden Merkmale:
8.1 dem Rotor (8a, 8b) der elektrischen Antriebsmaschine (4a, 4b) ist eine mechanische Drehzahl-/Drehmomentwandlungseinrichtung (25) nachgeschaltet;
8.2 die Drehzahl-/Drehmomentwandlungseinrichtung (25) ist in der baulichen Einheit (3) aus Achskörper (32) und Radachselementen (31a, 31b) integriert.

9. Antriebsvorrichtung (30) für den Einsatz in Fahrzeugen
9.1 mit einer Energiequelle (33);
9.2 mit einer Antriebsbaugruppe (1) gemäß einem der Ansprüche 1 bis 8;
9.3 die Antriebsbaugruppe (1) ist elektrisch mit der Energiequelle (33) verbunden.

10. Antriebsvorrichtung (30) nach Anspruch 9, **dadurch gekennzeichnet, daß** die Energiequelle (33) eine Brennstoffzelle umfaßt.

11. Antriebsvorrichtung (30) nach Anspruch 9, **dadurch gekennzeichnet, daß** die Energiequelle (33) eine Batterie umfaßt.

12. Antriebsvorrichtung (30) nach Anspruch 9, **gekennzeichnet durch** die folgenden Merkmale:
12.1 die Energiequelle (33) umfaßt ein dieselelektrisches Antriebsaggregat mit einer Verbrennungskraftmaschine und einem mechanisch mit diesem koppelbaren Generator;
12.2 der Generator ist elektrisch über einen Gleichspannungszwischenkreis mit der elektrischen Antriebsmaschine (4a, 4b) gekoppelt;
12.3 im Gleichspannungszwischenkreis ist ein, dem Generator zugeordneter Umrichter vorgesehen, welcher in räumlicher Nähe zum Generator angeordnet ist und mit den Umrichtern in der Antriebsbaugruppe (1) elektronisch verbunden ist.

13. Antriebsvorrichtung (30) nach Anspruch 9, **dadurch gekennzeichnet, daß** als Energiequelle (33) eine externe Energiequelle verwendet wird.
